(19) Europäisches Patentamt / European Patent Office / Office européen des brevets

(11) **EP 4 427 866 A1**

(12) **EUROPEAN PATENT APPLICATION**

(43) Date of publication:
**11.09.2024 Bulletin 2024/37**

(21) Application number: **23160115.4**

(22) Date of filing: **06.03.2023**

(51) International Patent Classification (IPC):
*B22F 1/00* (2022.01)        *B33Y 70/00* (2020.01)
*C22C 33/00* (2006.01)       *C22C 38/02* (2006.01)
*C22C 38/04* (2006.01)       *C22C 38/22* (2006.01)
*C22C 38/24* (2006.01)       *C22C 38/28* (2006.01)
*B22F 1/052* (2022.01)

(52) Cooperative Patent Classification (CPC):
(C-Sets available)
**B33Y 70/00; C21D 6/005; C21D 6/008;
C22C 33/00; C22C 33/0264; C22C 38/02;
C22C 38/04; C22C 38/22; C22C 38/24;
C22C 38/28;** B22F 1/05; B22F 9/082; B22F 10/14;
B22F 10/25; B22F 10/28;                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Sandvik Machining Solutions AB
811 81 Sandviken (SE)**

(72) Inventors:
• **Deirmina, Faraz
  811 81 SANDVIKEN (SE)**
• **Bettini, Eleonora
  811 40 SANDVIKEN (SE)**

(74) Representative: **Sandvik
Sandvik Intellectual Property AB
811 81 Sandviken (SE)**

(54) **FE-BASED POWDER FOR ADDITIVE MANUFACTURING**

(57)    The present invention relates to a Fe-based powder for additive manufacturing comprising the following elements in wt% based on the weight of all elements of the powder:
i) C in an amount ranging from 0.20 to 0.28
ii) Si in an amount ranging from 0.02 to 0.50
iii) Mn in an amount ranging from 0.1 to 0.8
iv) Cr in an amount ranging from 1.2 to 4.0
v) Mo in an amount ranging from of 1.8 to 3.0
vi) V in an amount ranging from 0.2 to 0.9
vii) Zr in an amount ranging from 0.001 to 0.015;
the balance being Fe.
   The invention also relates to the use of a Fe-based powder for additive manufacturing and to a process for producing an object by additive manufacturing, comprising building an object by iteratively
i) melting particles comprised in a Fe-based powder as described herein
ii) solidifying the melt to form a built object
iii) tempering the built object.

EP 4 427 866 A1

(52) Cooperative Patent Classification (CPC): (Cont.)
B22F 10/64; B22F 2009/0824; B22F 2009/0896;
B22F 2998/10; B22F 2999/00; B33Y 10/00;
B33Y 40/20; C21D 1/25; C21D 6/002

C-Sets
B22F 2998/10, B22F 2009/0824, B22F 10/14,
B22F 3/1021, B22F 10/64;
B22F 2998/10, B22F 2009/0824, B22F 10/28,
B22F 10/64;
B22F 2999/00, B22F 2009/0824, B22F 2201/02,
B22F 2201/11

**Description**

The present invention relates to a Fe-based powder for additive manufacturing, the use of the Fe-based powder, and a process for producing an object by additive manufacturing therefrom.

Background

Additive manufacturing (AM), or three-dimensional (3D) printing, is a promising manufacturing technique that makes it possible to produce complex structures and bodies that cannot easily be achieved via conventional manufacturing processes.

In many additive manufacturing techniques, in particular laser powder bed fusion (L-PBF), a powder is subjected to melting followed by rapid solidification at a cooling rate of $10^4$-$10^6$ K/s.

There is a constant need in industry to find new materials for additive manufacturing. AISI H13 is a Cr, Mo, V-based hot work tool steel with a martensitic microstructure which must be used in quenched and tempered condition. This steel shows a combination of high hardness and toughness after tempering above the secondary hardening peak (~500°C) at which the microstructure comprises tempered martensite and a fine distribution of secondary carbides.

This material is difficult to process by L-PBF additive manufacturing due to cracking, especially in the absence of plate preheating or L-PBF chamber heating. The cracking observed in the L-PBF processed AISI H13 without the use of plate preheating or a heated L-PBF chamber may be explained by two mechanisms related to large residual stress build-up leading to brittle fracture in the hard fresh martensite:

- the first and most important source of residual stress is the martensitic phase transformation occurring at around 200°C to 280°C, which results in locally constrained volume expansion and a dramatic increase in dislocation density.
- the second source of residual stress is the steep temperature gradients, which is characteristic for the L-PBF process, which causes two different stress-induced mechanisms: thermal gradient and volume shrinkage upon melt pool non-equilibrium rapid solidification.

Crack susceptibility due to residual stress can be explained by high hardness of the extremely supersaturated BCC (or BCT) martensitic matrix with limited ductility. Dislocation interactions will be accompanied by formation of immobile dislocations, crack nucleation (or crack propagation from pre-existing defects), and a finally brittle fracture.

The object of the present invention is to provide a new Fe-based powder which eliminates or at least alleviates the problems addressed in the above. In particular, the invention intends to provide a powder for additive manufacturing which results in no or substantially no cracks during laser-based 3D printing. Also, the invention provides a powder needing no heating or plate heating below 200°C during the additive manufacturing processing. The invention also imparts a powder with improved tempering resistance compared to low carbon or medium carbon hot work tool steels previously used in additive manufacturing. Moreover, the invention intends to provide a powder with a reduced amount of retained austenite and a softer martensite with higher martensite start temperature than previously known hot work tool steel powders. A further objective of the invention is to provide an object or body by means of e.g. L-PBF processing with lower susceptibility to cold cracking, higher thermal conductivity and lower susceptibility to solidification cracking.

The invention

The present invention relates to a Fe-based powder for additive manufacturing comprising the following elements in wt% based on the weight of all elements of the powder:

i) C in an amount ranging from 0.20 to 0.28
ii) Si in an amount ranging from 0.02 to 0.50
iii) Mn in an amount ranging from 0.1 to 0.8
iv) Cr in an amount ranging from 1.2 to 4.0
v) Mo in an amount ranging from of 1.8 to 3.0
vi) V in an amount ranging from 0.20 to 0.90
vii) Zr in an amount ranging from 0.001 to 0.015;

the balance being Fe.

According to one embodiment, the following equation (i) is fulfilled by the relation between the elements:

$$400 > 545 - 601.2(1-e^{(0.868C\ wt\%)}) - 34.4\ Mn\ wt\% - 13.7\ Si\ wt\% - 9.2\ Cr\ wt\% - 17.3\ Ni\ wt\% - 15.4\ Mo\ wt\% + 10.8\ V\ wt\% + 11.0\ Zr\ wt\% > 320 \qquad (i)$$

According to one embodiment, C ranges from 0.22 to 0.27, preferably from 0.22 to 0.26, and most preferably from 0.22 to 0.25.

According to one embodiment, Si ranges from 0.05 to 0.35 preferably from 0.05 to 0.30, and most preferably 0.05 to 0.1.

According to one embodiment, Mn ranges from 0.3 to 0.7, preferably from 0.3 to 0.5 or 0.3 to 0.45, and most preferably from 0.3 to 0.4.

According to one embodiment, Mo ranges from 2.0 to 2.8, preferably from 2.0 to 2.7 or from 2.0 to 2.5, and most preferably from 2.0 to 2.2.

According to one embodiment, Cr ranges from 1.9 to 3.2, preferably from 2.5 to 3.2 or 2.5 to 3.1, and most preferably from 2.5 to 2.9.

According to one embodiment, V ranges from 0.50 to 0.90, preferably from 0.50 to 0.60. According to one embodiment, Zr ranges from 0.001 to 0.002.

The wording "Fe-based powder for additive manufacturing" as used herein refers to a ready-to-print Fe-based powder for use in additive manufacturing processes like binder jetting, directed energy deposition or powder bed fusion such as laser beam powder bed fusion or electron beam powder bed fusion.

Increasing the carbon content above the range of the invention reduces the martensite start transformation temperature to an extent which is not desirable. A carbon content below the range of the invention promotes formation of ferrite or bainite even at high cooling rates, reduction of the martensite hardness, reduction of secondary carbides which is undesirable due to loss of the quenched and tempered hardness, as well as a loss of wear resistance of the additively manufactured object.

A carbon content according to the invention thus increases the martensite transformation temperature and a subsequent volumetric expansion at a higher temperature is more easily accommodated by the material without cracking due to the higher mobility of the atoms. Also, as the hardness of hypoeutectoid Fe-C quenched martensite is proportional to the carbon content and the cooling rate (v'), the carbon content of the Fe-based powder of the invention results in a softer martensite with decreased global hardness compared to e.g. AISI H13 which plays a complementary role to increase the resistance against brittle fracture caused by internal residual stresses.

Silicon functions as a deoxidizer. The absence of silicon significantly reduces the oxidation resistance and machining performance. A silicon content below the range of the invention makes machining of the manufactured object difficult, while a silicon content above the range of the invention promotes segregation during solidification and deteriorates the toughness of an eventually additively manufactured object. Silicon also anticipates secondary carbide formation by impeding cementite precipitation at lower temperatures.

Also, the silicon range of the invention enhances the thermal conductivity of the formed additively manufactured body, reduces the hot tearing susceptibility, and delays the secondary hardening peak which thereby occurs at higher temperatures during the tempering stage. This will eventually lead to enhanced thermal softening resistance, and improved resistance to thermal fatigue cracking of an object additively manufactured from the Fe-based powder.

Manganese improves the hardenability and machinability of the additively manufactured object. Manganese also binds sulphur which may be present at impurity levels and prevents red brittleness. A manganese content higher than the range of the invention stabilizes austenite which is undesirable.

Molybdenum contributes significantly to the hardenability. It also leads to the formation of secondary molybdenum-rich carbides (with a smaller diameter than Cr carbides) which are more resistant to coarsening than the Cr-rich carbides. A molybdenum content above the range of the invention reduces the martensite start temperature significantly, and promotes Mo rich carbide precipitation during the austenitization heat treatment which is undesirable.

A chromium content within the range of the invention is sufficient in terms of oxidation resistance. A minimum amount of Cr in accordance with the invention in combination with Mo will be needed to provide hardenability in large sections of the manufactured body. A Cr content above the range of the invention will increase the chromium activity leading to formation of easy-to-coarsen secondary $Cr_{23}C_6$ and $Cr_7C_3$ carbides which are undesirable and harmful to the tempering resistance. Also, a Cr content higher than the range of the invention reduces the martensite start temperature.

Vanadium partially forms V (C, N) at high temperatures which opposes excessive grain growth during austenitization. The remaining V, or partial dissolution of V (C, N) during austenitization, forms extremely fine and stable V (C, N) secondary carbide precipitation during tempering which keeps the hardness of the Fe-based powder at a high level. The vanadium content within the range of the invention, in combination with the C content, guarantees a sufficient vol% of fine secondary V (C, N) carbides formed during tempering which, as opposed to AISI H13, will keep most of the C and V inside the austenite matrix during the austenitization treatment. Also, as the microstructure subsequent to L-PBF treatment is extremely fine, no primary/proeutectoid V (C, N) are needed. The range of the vanadium content of the invention is thus adapted thereto while a sufficient amount of extremely fine and stable secondary VC forming during the tempering process at about 500°C to 680°C is provided.

Zr forms ZrC in the presence of carbon and $ZrO_2$ in the presence of oxygen in the metal melt during solidification and can act as an inoculant to reduce the grain size as the Fe-based powder is being manufactured. Zr is known as a sulphur scavenger and improves the grain boundary strength. The presence of Zr content should be strictly controlled below 0.015 wt.% to avoid excessive primary carbide formation and stabilization of ferrite.

According to one embodiment, the Fe based powder comprises, in wt%

| | |
|---|---|
| Co: | up to 0.1 |
| Ni: | up to 0.1 |
| Al: | up to 0.1 |
| Ti: | up to 0.1 |
| Nb: | up to 0.01 |
| W: | up to 0.01 |
| Hf: | up to 0.005 |
| Ta: | up to 0.005 |
| Pb: | up to 0.0005 |
| Sn: | up to 0.003 |
| O: | up to 0.10 |
| N: | up to 0.05 |

the balance being Fe and possible further impurities which may include S, P, and Cu. According to one embodiment, the Fe-based powder contains one or several of the elements Co, Ni, Al, Ti, Nb, W, Hf, Ta, Pb, Sn, O, N, S, P and Cu in a total amount of up to 0.6 wt% or up to 0.3 wt% or up to 0.1 wt%.

According to one embodiment, the comprised elements of the Fe-based powder are present as an alloy, i.e. as a substantially uniform chemical composition in each of the particles of the powder. Thus, each particle of the powder may comprise substantially the same ratio of the elements as specified herein.

According to one embodiment, at least 90 vol% of the particles of the powder has a particle size lower than 110 $\mu$m or lower than 100 $\mu$m, or lower than 53 $\mu$m, or lower 45 $\mu$m, such as lower than 38 $\mu$m, or lower than 32 $\mu$m or lower than 25 $\mu$m or lower than 16 $\mu$m as measured by laser diffraction according to ASTM B822.

According to one embodiment, at least 10 vol% of the particles of the powder has a particle size higher than 5 $\mu$m.

According to one embodiment, the density of the Fe-based powder following extraction ranges from about 7 to about 9 g/cm$^3$, preferably from 7.5 to 8.5 g/cm$^3$.

According to one embodiment, the Fe-based powder is a lath martensite comprising no other type of martensite such as butterfly martensite or lenticular martensite or mixtures thereof.

The invention also relates to a method of producing a Fe-based powder as disclosed herein comprising the steps of

i) providing a steel melt having a composition of elements resulting in a Fe-based powder as disclosed herein subsequent to an atomization process,
ii) providing the Fe-based powder by atomizing the steel melt,
iii) optionally extracting, from the atomized powder, a Fe-based powder fraction wherein preferably at least 90 vol% of the particles of the powder has a particle diameter < 110 $\mu$m or any other upper limit as specified herein and preferably a particle diameter > 5 $\mu$m.

According to one embodiment, the steel melt is transformed into a Fe-based powder using an atomization technique such as a gas atomization technique wherein a stream of a steel melt flowing through a nozzle is disintegrated into droplets by impingement of the steel melt with a high-pressure inert gas stream, such as nitrogen or argon, wherein the particles thus created are collected in a protective atmosphere. The pressure of the gas stream is preferably above 30 bar. Depending on the exact desired properties of the powder, a higher or lower pressure can be used. The droplets are subsequently cooled in a conventional atomization tower to form solid particles. The cooling rate will affect the properties of the powder but typically rates of between $10^2$ to $10^7$ K/s may be used. Particles in the desired fraction are subsequently preferably extracted using sieving operations comprising conventional steps of passing the powder through a mesh and/or suitable air classification equipment, such as an ATP Turboflex Air Classifier from Hosokawa Micron Ltd. Use of alternative air classification or powder separation equipment is also possible.

The present invention also relates to the use of a Fe-based powder as defined herein for additive manufacturing, for example for manufacture or repair of tool holders, injection molding tools and dies, extrusion dies, hot stamping dies, forging dies, etc. The Fe-based powder has proven to be a highly promising powder for a plurality of additive manufacturing processes such as for Laser-Powder Bed Fusion (L-PBF), Electron Powder Bed Fusion (E-PBF), Direct Energy Deposition (DED) and Binder Jetting, particularly for L-PBF. While L-PBF is extensively described herein as a suitable additive manufacturing process, any other process is equally applicable for additive manufacturing.

The invention further relates to a process for producing an object by additive manufacturing, comprising building an object by iteratively

i) melting particles comprised in a Fe-based powder as described herein;
ii) solidifying the melt;
iii) tempering the built object.

According to one embodiment, the tempering of the built object may be conducted without any preceding heat treatment, such as homogenization or austenitization. According to one embodiment, a preceding heat treatment, such as homogenization or austenitization, is performed prior to tempering of the built object.

According to one embodiment, the melting and solidifying steps are iterated or repeated as conventionally known in the art of additive manufacturing so as to produce an object of a desired shape.

According to one embodiment, austenitization is conducted at, e.g. 950-1100 °C. According to one embodiment, the additively manufactured object produced from the Fe-based powder is austenitized (e.g. 1020°C, 20 min), gas quenched and tempered (hereafter QT) which may be performed in a way similar to wrought materials such as AISI H13. Also, the object manufactured from the Fe-based powder can be directly tempered (hereafter DT) from as built state.

According to one embodiment, as the building process results in an as-built object having an essentially martensitic microstructure with only a small amount of retained austenite, i.e. substantially without unwanted precipitates, homogenization of or annealing of the as-built object is not always necessary.

According to one embodiment, tempering is performed at a temperature in the range of 200-700°C, preferably two times during a period of time ranging from 1 to 3 hours each, e.g. 2h each time. Tempering at too high temperatures may lead to a reduced hardness because of recovery of dislocations and carbide coarsening.

According to one embodiment, tempering is performed at a temperature in the range of 500-650°C, preferably two times, each time preferably for 2 h. The tempering may increase the hardness of the object to above 520 HV5, such as approximately 540 HV5. According to one embodiment, the tempering is carried out so that any heat treatment of the built object is performed at a temperature below 700°C, preferably below 650 °C. According to one embodiment, the melt is solidified at a cooling rate of $10^4$-$10^6$ K/s. Solidification at a cooling rate of $10^4$-$10^6$ K/s may be referred to as a fast solidification. According to one embodiment, the process for producing an object by additive manufacturing comprises building an object by iteratively

i) depositing a Fe-based powder as described herein;
ii) applying a binder to form a bound Fe-based powder,
iii) curing and debinding the binder
and subsequently
iv) sintering the bound Fe-based powder.
v) austenitization of the sintered Fe-based powder followed by quenching, and
vi) tempering the built object.

When performing this embodiment, the process of additive manufacturing is preferably binder jetting.

Example 1

A Fe-based metal melt was provided in an open furnace by induction melting which metal melt subsequently was exposed to gas atomization in nitrogen environment to provide a Fe-based powder (*Example composition 1*) containing the below elements (the balance being Fe):

Example composition 1

C : 0.27 wt%

(continued)

| Si : | 0.08 wt% |
| Mn : | 0.40 wt% |
| Cr: | 1.90 wt% |
| Mo : | 2.20 wt% |
| V : | 0.50 wt% |
| Zr: | 0.001 wt% |
| N: | 0.020 wt% |

The Fe-based powder had a reduced equilibrium solidification temperature range compared with an AISI H13 powder. From table 1 it can be noticed the reduction was between 18 to 43 °C for Example composition 1 and simulated compositions 2-4. The compositions 1-4 according to the invention had a Martensite start temperature range of 325°C to 400°C which is at least about 75°C higher than the AISI H13 powder as determined from the calculated modeling (simulations) and experimental results as further shown in table 2. The experimental martensite start temperature (Ms) of the Example composition 1 and the AISI H13 sample were measured using dilatometry (DIL 805) by heating a cylindrical object (4 mm in diameter, 10 mm long) to 1020°C at 10 K/min using induction heating and holding the temperature at 1020°C for 20 min followed by quenching at 40 K/s using an inert gas flow. The dilation (change in length) which was recorded was used to experimentally determine the onset of the martensitic transformation (i.e. the Ms temperature). Modelling (simulations) were also performed using the commercial thermodynamic software Thermo-Calc to obtain a modelled martensitic temperature (Ms) for compositions 1-4 and the AISI H13 steel. As the calculated Ms temperature obtained from the modelling and the experimental Ms temperature of table 1 were at virtually the same level, all the modelled results were assumed to be valid.

Table 1

| Powder composition (in wt%): | Equilibrium Solidification temperature range | Calculated Martensite start temperature [°C] | Experimental Martensite start temperature[°C] |
|---|---|---|---|
| AISI H13 | 99 | 240 | ~250 |
| composition 2<br>C: 0.22<br>Si: 0.05<br>Mn: 0.3<br>Cr: 1.9<br>Mo: 2.0<br>V: 0.4<br>Zr:0.001 | 56 | 400 | - |
| composition 3<br>C: 0.25<br>Si: 0.2<br>Mn: 0.4<br>Cr: 2.5<br>Mo: 2.25<br>V: 0.5<br>Zr: 0.005 | 68 | 375 | - |
| composition 4<br>C: 0.28<br>Si: 0.35<br>Mn: 0.5<br>Cr: 3.1<br>Mo: 2.5<br>V: 0.6<br>Zr: 0.01 | 81 | 325 | - |

(continued)

| Powder composition (in wt%): | Equilibrium Solidification temperature range | Calculated Martensite start temperature [°C] | Experimental Martensite start temperature[°C] |
|---|---|---|---|
| Example composition 1 | 65 | 380 | ~360 |

When the Fe-based powder comprised low nitrogen levels below 0.05 wt% based on the weight of all elements of the Fe-based powder, it showed no significantly reduced amount of V (C, N) compared with the commercially available AISI H13 powder at austenitization temperatures from 1000°C to 1100°C (the common austenitization temperature for AISI H13) based on reduced V and C contents and activities as determined by the Thermo-Calc software (see table 2). An austenite with comparable amounts of C and V in solid solution to the austenite of AISI H13 material was thus obtained through the simulations performed. After quenching and tempering, fine and stable secondary V (C, N) precipitates from the supersaturated quenched martensite were obtained.

Table 2

| Austenitization Temperature [°C] | Remaining V (wt%) in AISI H13 austenite matrix | Remaining V (wt%) in austenite matrix (inv) | Remaining C (wt%) in austenite matrix AISI H13 | Remaining C (wt%) in austenite matrix (inv) |
|---|---|---|---|---|
| 1000 | 0.29 | 0.30 | 0.28 | 0.23 |
| 1010 | 0.32 | 0.31 | 0.29 | 0.23 |
| 1020 | 0.34 | 0.32 | 0.29 | 0.23 |
| 1030 | 0.36 | 0.33 | 0.30 | 0.23 |
| 1040 | 0.39 | 0.34 | 0.30 | 0.23 |
| 1050 | 0.42 | 0.35 | 0.31 | 0.24 |
| 1060 | 0.44 | 0.36 | 0.32 | 0.24 |
| 1070 | 0.47 | 0.37 | 0.32 | 0.24 |
| 1080 | 0.49 | 0.37 | 0.33 | 0.24 |
| 1090 | 0.52 | 0.38 | 0.34 | 0.24 |
| 1100 | 0.55 | 0.39 | 0.34 | 0.24 |
| Nominal wt.% (in the initial melt) | 1.0 | 0.5 | 0.4 | 0.25 |

In another simulation with Example composition 1 in which no nitrogen was present, the amounts of V and C left in the solid solution generally increased (as shown in table 3) compared to the amounts in table 2 as the absence of nitrogen reduced the thermodynamic stability of VC carbides in the austenitization temperature range.

Table 3

| Austenitization Temperature [°C] | Remaining V (wt%) in austenite matrix AISI H13 | Remaining V (wt%) in austenite matrix Fe-based powder (invention) | Remaining C (wt%) in austenite matrix AISI H13 | Remaining C (wt%) in austenite matrix Fe-based powder (invention) |
|---|---|---|---|---|
| 1000 | 0.40 | 0.39 | 0.26 | 0.22 |
| 1010 | 0.43 | 0.43 | 0.27 | 0.23 |
| 1020 | 0.47 | 0.47 | 0.28 | 0.24 |
| 1030 | 0.50 | 0.50 | 0.29 | 0.25 |
| 1040 | 0.53 | 0.50 | 0.29 | 0.25 |

(continued)

| Austenitization Temperature [°C] | Remaining V (wt%) in austenite matrix AISI H13 | Remaining V (wt%) in austenite matrix Fe-based powder (invention) | Remaining C (wt%) in austenite matrix AISI H13 | Remaining C (wt%) in austenite matrix Fe-based powder (invention) |
|---|---|---|---|---|
| 1050 | 0.58 | 0.50 | 0.30 | 0.25 |
| 1060 | 0.62 | 0.50 | 0.31 | 0.25 |
| 1070 | 0.66 | 0.50 | 0.32 | 0.25 |
| 1080 | 0.70 | 0.50 | 0.33 | 0.25 |
| 1090 | 0.75 | 0.50 | 0.34 | 0.25 |
| 1100 | 0.80 | 0.50 | 0.35 | 0.25 |
| Nominal wt.% (in the initial melt) | 1.00 | 0.50 | 0.40 | 0.25 |

Objects (e.g. wire drawing dies and disk shaped specimens with a 40 mm diameter and a 20 mm width) were additively manufactured from the Fe-based powder without formation of cracks on a build plate at room temperature or preheated up to 170°C. This temperature range is achievable in many commercial L-PBF machines without the need of excessive preheating.

V (C,N) grains

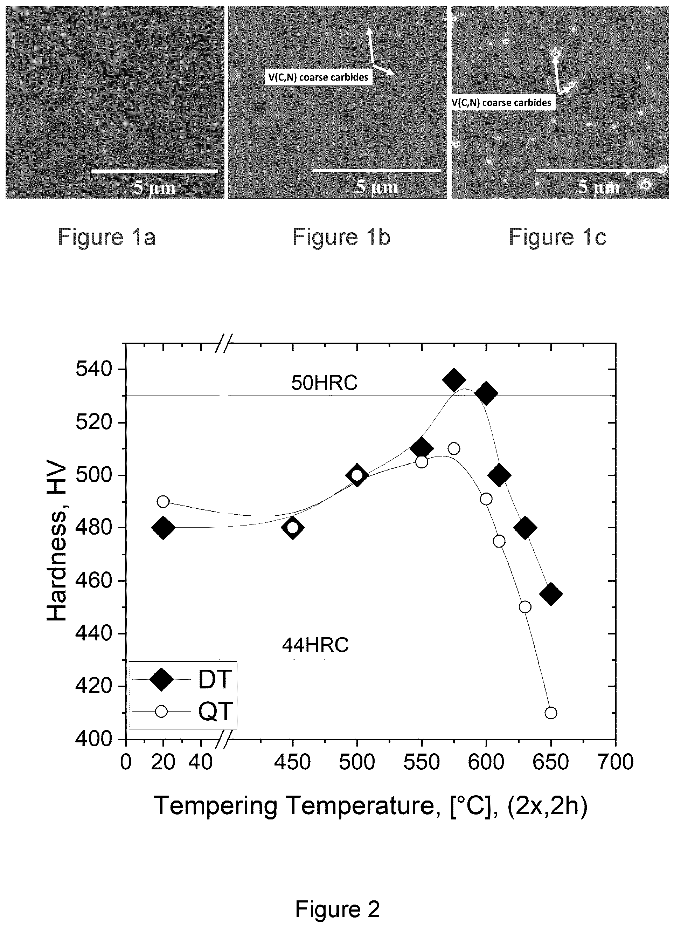

The additively manufactured object of figures 1a and 1b (obtained from Example composition 1) in austenitized state (1020 °C, 20 min) have a finer austenite grain size and does not contain as coarse V(C,N) grains as that of the wrought AISI H13 of figure 1c.

Hardness

The object additively manufactured from Example composition 1 was austenitized in a vacuum furnace (TAV Minijet) (1020°C, 20 min), gas quenched to room temperature, and tempered (hereafter QT) like wrought materials, as well as directly tempered (hereafter DT) from as built state. The tempering curves of the Fe-based powder (invention) of figure 2 indicate that within the temperature range 500-650°C, hardness levels of HRC 44 to HRC 50 for AISI H13 steel can be achieved also by the Fe-based powder of the invention.

Tempering resistance test

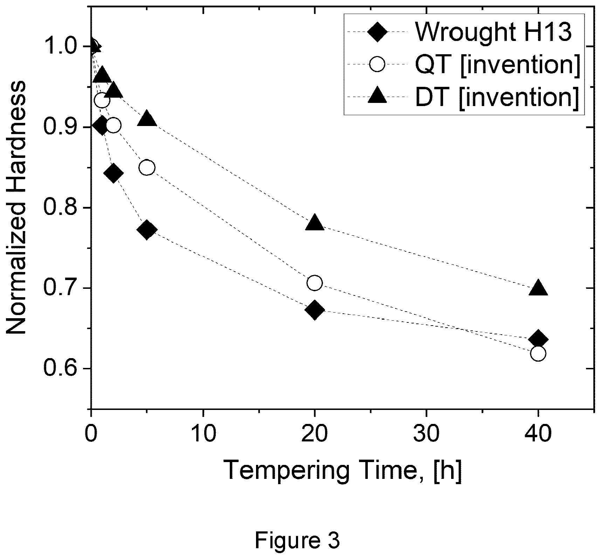

A tempering resistance test was conducted at 650°C by holding a printed object using the Example composition 1 and the AISI H13 steel in a chamber furnace at 650°C for a predetermined time.
The object of the example composition 1 showed in QT condition (tempered at 610°C, 47 HRC starting hardness) an enhanced tempering resistance compared with the wrought AISI H13. In the DT condition (tempered at 630°C, 47 HRC starting hardness), the object of the Example composition 1 outperformed the wrought AISI H13 (denoted H13 in figure 3) in terms of increased hardness. The results are illustrated in figure 3.

Thermal fatigue (TF) tests

Thermal fatigue (TF) tests were conducted using the following conventional procedure with customary equipment:
A sample (disc) mounted on a shaft rotating with an angular velocity ($\omega$) of 4 rpm was induction heated up to 630 °C and subsequently rapidly cooled to 60 °C by a water jet (flow rate = 1.5 $cm^3$ $s^{-1}$) impinging the disc surface. To ensure reaching the minimum temperature during each TF cycle, the sample was immersed in a water box before starting the induction heating. The maximum target temperature was measured just after the inductor by means of an infrared pyrometer. The emissivity was set to 0.8 corresponding to the emissivity of iron oxide measured in a previous study. The test was periodically interrupted to evaluate the TF cracking and the surface microhardness profile.

The thermal fatigue mean crack depth, maximum crack depth (main damaging mechanism in dies and tools) and thermomechanical softening resistance (hardness drop) of the invention sample were improved following DT (direct tempering) and QT (quenching and tempering) compared with that of the wrought AISI H13 with similar starting hardness. The mean surface crack length (denoted mean crack length in table 4) of the invention sample was increased compared to that of the wrought AISI H13. Coupling the mean crack depth and the surface cracking lengths conveyed the fact that the TF damage of the invention sample was confined to the surface thereof which is less critical than that of the wrought AISI H13 which showed more penetrated cracks and increased surface softening.

Table 4

|  | Hardness drop* | Mean crack depth (normalized by AISI H13 | Maximum crack depth (normalized by AISI H13 | Mean crack length (normalized by AISI H13 |
|---|---|---|---|---|
| AISI H13 | -14 | 1.0 | 1.0 | 1.0 |
| QT (invention) | -10% | 0.7 | 0.4 | 1.5 |
| DT (invention) | -9% | 0.7 | 0.6 | 1.3 |
| *cycling from 630°C to 60°C with water quenching, 1500 cycles | | | | |

Thermal conductivity

The thermal conductivity coefficients of additively manufactured samples of the AISI H13 steel and the invention were determined through the relationship (i) below, in which $\alpha$ stands for the thermal diffusivity, $C_P$ for the specific heat of the sample and $\rho$ for the density:

$$\lambda = \alpha \, C_P \, \rho \quad (i)$$

The thermal diffusivity ($\alpha$) values were determined in a conventional manner by means of non-destructive and noncontact Laser Flash Technique (Netzsch LFA 467 HyperFlash) at 25 °C as four samples were prepared for each of the analyzed materials with 12.7 mm diameter and 2 mm thickness. The thermal diffusivity was determined from the time required to reach 50% of the maximum temperature increase. In order to increase the statistical confidence, four repetitions were carried out to determine the thermal conductivity.

The specific heat ($C_P$) values were calculated by means of Differential Scanning Calorimetry (Netzsch DSC 204 Phoenix) using the conventional method of ratios adopting a sapphire reference sample. As can be noticed, an increase of the thermal conductivity was obtained for the invention sample compared to that of the wrought AISI H13 steel.

Table 5

|  | $\alpha$ (m2/s) [Measured] | Cp (J/K*kg) [Measured] | Density (g/mm$^3$) | Thermal Conductivity at 300K W/m*K |
|---|---|---|---|---|
| Invention | 9.9 | 0.47 | 7.8 | 36.7 |
| wrought-AISI H13 | 6.5 | 0.45 | 7.8 | 23.2 |

**Claims**

1. Fe-based powder for additive manufacturing comprising the following elements in wt% based on the weight of all elements of the powder:

   i) C in an amount ranging from 0.20 to 0.28
   ii) Si in an amount ranging from 0.02 to 0.50
   iii) Mn in an amount ranging from 0.1 to 0.8
   iv) Cr in an amount ranging from 1.2 to 4.0

v) Mo in an amount ranging from of 1.8 to 3.0
vi) V in an amount ranging from 0.2 to 0.9
vii) Zr in an amount ranging from 0.001 to 0.015;

the balance being Fe.

2. Fe-based powder according to claim 1, wherein $400 > 545 - 601.2(1-e^{(0.868C\ wt\%)}) - 34.4$ Mn wt% $- 13.7$ Si wt% $- 9.2$ Cr wt% $- 17.3$ Ni wt% $- 15.4$ Mo wt% $+ 10.8$ V wt% $+ 11.0$ Zr wt% $> 320$.

3. Fe-based powder according to claim 1 or 2, wherein C ranges from 0.22 to 0.27.

4. Fe-based powder according to any one of claims 1 to 3, wherein C ranges from 0.22 to 0.26.

5. Fe-based powder according to any one of claims 1 to 4, wherein C ranges from 0.22 to 0.25.

6. Fe-based powder according to any one of claims 1 to 5, wherein Si ranges from 0.05 to 0.1.

7. Fe-based powder according to any one of claims 1 to 6, wherein Mn ranges from 0.3 to 0.5.

8. Fe-based powder according to any one of claims 1 to 7, wherein Mo ranges from 2.0 to 2.7.

9. Fe-based powder according to any one of claims 1 to 8, wherein Cr ranges from 2.5 to 3.2.

10. Fe-based powder according to any one of claims 1 to 9, wherein V ranges from 0.50 to 0.60.

11. Fe-based powder according to any one of claims 1 to 10, wherein Zr ranges from 0.001 to 0.002.

12. Fe-based powder according to any of one of claims 1 to 11, wherein at least 90 vol% of the particles of the powder has a particle size lower than 110 $\mu$m.

13. Fe-based powder according to any of one of claims 1 to 12, wherein at least 90 vol% of the particles of the powder has a particle size higher than 5 $\mu$m.

14. Use of a Fe-based powder according to anyone of claims 1 to 13 for additive manufacturing.

15. A process for producing an object by additive manufacturing, comprising building an object by iteratively

i) melting particles comprised in a Fe-based powder according to any one of claims 1 to 13
ii) solidifying the melt to form a built object
iii) tempering the built object.

Figure 1a          Figure 1b          Figure 1c

Figure 2

Figure 3

Europäisches
Patentamt

European
Patent Office

Office européen
des brevets

**EUROPEAN SEARCH REPORT**

Application Number

EP 23 16 0115

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WILDA NORBERT ET AL: "Material properties of AISI H10 (32CrMoV12-28) hot work tool steel processed by Laser Powder Bed Fusion with 200°C substrate preheating temperature", PROCEDIA COMPUTER SCIENCE, ELSEVIER, AMSTERDAM, NL, vol. 217, January 2023 (2023-01), pages 1008-1017, XP087247472, ISSN: 1877-0509, DOI: 10.1016/J.PROCS.2022.12.299 * abstract * * chapters 1 and 2 * * tables 1-3 * * figure 1 * | 1-15 | INV.<br>B22F1/00<br>B33Y70/00<br>C22C33/00<br>C22C38/02<br>C22C38/04<br>C22C38/22<br>C22C38/24<br>C22C38/28<br>B22F1/052 |
| X | WILD NORBERT ET AL: "Selective Laser Melting of AISI H10 (32CrMoV12-28) with substrate preheating for crack prevention", PROCEDIA COMPUTER SCIENCE, [Online] vol. 200, January 2022 (2022-01), pages 1274-1281, XP093070455, AMSTERDAM, NL ISSN: 1877-0509, DOI: 10.1016/j.procs.2022.01.328 Retrieved from the Internet: URL:https://www.sciencedirect.com/science/article/pii/S1877050922003374/pdf?md5=a666461089b75ee07a102fcb75fcf574&pid=1-s2.0-S1877050922003374-main.pdf> [retrieved on 2023-08-03] * abstract * * chapters 1 and 2 * * tables 1-3 * * figures 1,2 * <br><br>-/-- | 1-15 | TECHNICAL FIELDS SEARCHED (IPC)<br><br>B22F<br>C22C<br>B33Y |

The present search report has been drawn up for all claims

| Place of search | Date of completion of the search | Examiner |
|---|---|---|
| The Hague | 4 August 2023 | Stocker, Christian |

EPO FORM 1503 03.82 (P04C01)

page 1 of 2

Europäisches Patentamt

European Patent Office

Office européen des brevets

## EUROPEAN SEARCH REPORT

Application Number

EP 23 16 0115

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2019 135830 A1 (VOESTALPINE BOEHLER EDELSTAHL GMBH & CO KG [AT]) 1 July 2021 (2021-07-01) * the whole document * ----- | 1-15 | |
| A | DEIRMINA FARAZ ET AL: "Production and Characterization of a Modified Hot Work Tool Steel by Laser Powder Bed Fusion", METALLURGICAL AND MATERIALS TRANSACTIONS A, SPRINGER US, NEW YORK, vol. 53, no. 7, 5 May 2022 (2022-05-05), pages 2642-2651, XP037869761, ISSN: 1073-5623, DOI: 10.1007/S11661-022-06694-2 [retrieved on 2022-05-05] * abstract * * chapters 1 and 2; table 1 * ----- | 1-15 | |
| A | WO 2017/111680 A1 (UDDEHOLMS AB [SE]) 29 June 2017 (2017-06-29) * the whole document * ----- | 1-15 | TECHNICAL FIELDS SEARCHED (IPC) |

The present search report has been drawn up for all claims

| Place of search | Date of completion of the search | Examiner |
|---|---|---|
| The Hague | 4 August 2023 | Stocker, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 23 16 0115

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2023

| Patent document cited in search report | Publication date | Patent family member(s) | Publication date |
|---|---|---|---|
| DE 102019135830 A1 | 01-07-2021 | DE 102019135830 A1 | 01-07-2021 |
| | | EP 4081362 A1 | 02-11-2022 |
| | | WO 2021130301 A1 | 01-07-2021 |
| WO 2017111680 A1 | 29-06-2017 | BR 112018012850 A2 | 04-12-2018 |
| | | CA 3009044 A1 | 29-06-2017 |
| | | CN 108474085 A | 31-08-2018 |
| | | EP 3394309 A1 | 31-10-2018 |
| | | ES 2878268 T3 | 18-11-2021 |
| | | JP 7045315 B2 | 31-03-2022 |
| | | JP 2019504197 A | 14-02-2019 |
| | | KR 20190034491 A | 02-04-2019 |
| | | RU 2018126761 A | 28-01-2020 |
| | | SE 1551702 A1 | 23-06-2017 |
| | | SI 3394309 T1 | 30-09-2021 |
| | | TW 201726942 A | 01-08-2017 |
| | | US 2019003021 A1 | 03-01-2019 |
| | | WO 2017111680 A1 | 29-06-2017 |

EPO FORM P0459

For more details about this annex : see Official Journal of the European Patent Office, No. 12/82